# EUROPÄISCHE PATENTANMELDUNG

(11) **EP 1 531 347 A1**
(43) Veröffentlichungstag der Anmeldung: **18.05.2005**
(21) Anmeldenummer: 04024738.9
(22) Anmeldetag: 16.10.2004
(51) Int. Cl.: G02B 6/136

(54) **Verfahren und Vorrichtung zur Herstellung von flüssigen optischen Wellenleitern**

(30) Priorität: 13.11.2003 DE 10352974
(71) Anmelder: Forschungszentrum Karlsruhe GmbH, 76133 Karlsruhe (DE)
(72) Erfinder: Steinbock, Lothar, Dr., 76351 Linkenheim (DE); Litfin, Karsten, 76344 Eggenstein-Leopoldshafen (DE); Pfleging, Wilhelm, Dr., 76646 Bruchsal (DE)

(57) **Zusammenfassung**

Die Erfindung betrifft ein Verfahren und eine Vorrichtung zur Herstellung von flüssigen optischen, vorzugsweise monomodigen Wellenleitern. Hierzu wird zunächst ein Substrat (10) mit einem Laserstrahl (21) beaufschlagt, wodurch im Substrat ein Kanal (22) erzeugt wird. Anschließend werden Tropfen (31) eines flüssigen optischen Mediums aus einer Tropfenstrahldüse (30) in den Kanal (22) eingefüllt, wodurch sich die Tropfen (31) zu einem optischen Wellenleiter (32), der flüssig bleibt, verbinden. Abschließend wird die kanalseitige Fläche des Substrats mit einem Deckel verschlossen, der den Kanal (22) nicht berührt.

## Beschreibung

Die Erfindung betrifft ein Verfahren und eine Vorrichtung zur Herstellung von flüssigen optischen Wellenleitern.

Optische Wellenleiter bestehen im Wesentlichen aus einem Kern aus einem lichtleitenden Material und einen diesen umgebenden Mantel. Als Folge der Totalreflexion an der Grenzschicht zwischen Kern und Mantel wird Licht durch den Wellenleiter geleitet. Totalreflexion tritt auf, solange der Brechungsindex des Kerns größer als der des Mantels ist. Einmoden-Wellenleiter für die Infrarotbereiche bei 1,3 µm und 1,5 µm leiten Licht in Kanälen durch Totalreflexion. Die transversalen Abmessungen der Kanäle betragen rund 10 µm und der Brechungsindex-Unterschied zwischen Kanal und Hülle beträgt etwa 0,01.

Bekannt sind Herstellungsverfahren mit Masken, die eine Vielzahl von Prozessschritten aufweisen (US 6537723 B1, US 6500603 B1, US 6327415 B1, US 6246825 B1, US 5182783 A, US 4435261 A). Eine bekannte Lösung aus dem Stand der Technik ist das Aufbringen einer dünnen Schicht mit größerem Brechungsindex auf ein Substrat, die UV-Belichtung durch eine Maske, Ätzung der nicht benötigten Teile und Überschichten der stehen gebliebenen Wellenleiter mit dem niedriger brechenden Substratmaterial. Eine weitere Lösung ist die direkte Herstellung der Kanäle im Substrat durch Änderung des Brechungsindex in einem Kanal mit UV-Strahlung und Überschichten mit Substratmaterial. Eine weitere bekannte Lösung ist die Herstellung der Kanäle durch Laserablation, Befüllung der Kanäle mit Material aus größerem Brechungsindex und Überschichten der Kanäle in jeweils anderen Vorrichtungen.

Die bekannten Maskenverfahren erfordern hohe Rüstkosten (Maskenherstellung, Ätzbäder, Spincoater) und sind daher nur für große Serien wirtschaftlich. Die direkt schreibenden Verfahren (UV-Laserablation und UV-Direktbelichtung) benötigen weitere Schritte, um einen geschützten Wellenleiter zu erzeugen.

W. Pfleging, j. Böhm, S. Finke, E. Gaganidze, Th. Hanemann, R. Heidinger und K. Litfin beschreiben in *Direct laser-assisted processing of polymers for micro-fluidic and micro-optical applications,* Proc. of SPIE, Vol. 4977, *Conference on Photon Processing in Microelectronics and Photonics II,* San José, USA, Januar 2003, S. 346-356, ein Verfahren zur Herstellung von flüssigen optischen Wellenleitern, wobei in einem Substrat mittels eines Laserstrahls ein Kanal erzeugt wird, in den Öl eingefüllt wird, so dass sich ein flüssiger optischer Wellenleiter bildet, und die kanalseitigen Fläche des Substrats mit einem Deckel, der den Kanal berührt, verschlossen wird. Nachteilig hieran ist, dass das Öl mit Substrat chemisch reagiert und so die Transmissionsverluste derartiger Wellenleiter ansteigen.

Davon ausgehend ist es die Aufgabe der Erfindung, ein Verfahren, flüssige optische Wellenleiter ohne die aufgeführten Nachteile herzustellen, und eine Vorrichtung zur Herstellung von flüssigen optischen Wellenleitern anzugeben.

Diese Aufgabe wird durch ein Verfahren mit den Schritten des Anspruchs 1 und durch eine Vorrichtung mit den Merkmalen des Anspruchs 5 gelöst. Die Unteransprüche beschreiben jeweils vorteilhafte Ausgestaltungen der Erfindung.

Erfindungsgemäß werden in einem ersten Schritt a) auf einem Substrat Kanäle (Gräben) mittels Laserstrahlung durch Formabtrag und/oder Laserablation herstellt. Um einen flüssigen optischen monomodigen Wellenleiter (Einmoden-Wellenleiter) bei einer Wellenlänge der Laserstrahlung zwischen 1,3 und 1,6 µm zu erhalten, müssen die transversalen Abmessungen der Kanäle in der Größenordnung von 10 µm, d.h. zwischen 3 µm und 30 µm, bevorzugt zwischen 5 µm und 20 µm liegen. Als Substrat werden Kunststoffe wie z. B. Polymethylmethacrylat (PMMA) eingesetzt. Bei geringerer Wellenlänge der Laserstrahlung sind geringere Abmessungen der Kanäle zu wählen; bei größerer Wellenlänge der Laserstrahlung entsprechend größere Abmessungen der Kanäle.

Anschließend wird in einem zweiten Schritt b) ein optisches Medium in Form einer transparenten Flüssigkeit mit einer Tropfendüse bzw. Tropfenstrahldüse direkt in die zuvor erzeugten Kanäle (Gräben) eingefüllt. Hierfür ist jede transparente Flüssigkeit geeignet, deren Brechungsindex größer ist als der des Substrats. Die Flüssigkeitstropfen verbinden sich in den Kanälen in Folge der Kapillarkräfte zu einem durchgehenden flüssigen optischen Wellenleiter. Durch elektrische Ansteuerung der Tropfen(strahl)düse werden Tropfengröße und Tropfenabstand derart gewählt, dass der Kanal gerade so weit befüllt wird, wie es zur Ausbildung eines flüssigen optischen Wellenleiters erforderlich ist. Der übliche Durchmesser der Tropfen liegt zwischen 5 µm und 50 µm.

In einem dritten Schritt c) wird die kanalseitige Fläche des Substrats mit einem Deckel, vorzugsweise einem Hohldeckel abgedeckt (verschlossen). Der Deckel, der die auf dieser Seite des Substrats befindlichen Kanäle vorzugsweise nicht berührt, scheint aufgrund der Adhäsion des flüssigen Wellenleiters in den Kanälen zwar nicht erforderlich zu sein, er verhindert aber entscheidend die Verdampfung und Verschmutzung des flüssigen Wellenleiters. Durch die erfindungsgemäße Art des Abdeckens (Verschließens) entfallen weitere sonst notwendige Arbeitsschritte wie das Polymerisieren des flüssigen Wellenleiters und das Überfüllen der Leiterkanäle.

In einer besonderen Ausgestaltung der Erfindung sind in einem Tintenstrahlkopf mehreren Tropfen(strahl)düsen, die jeweils Flüssigkeiten mit denselben bzw. mit unterschiedlichen optischen Eigenschaften enthalten. Durch kontrolliertes Einbringen dieser Flüssigkeiten in die Kanäle lassen sich optische Wellenleiter mit vorteilhaften optischen Übertragungseigenschaften herstellen.

In einer weiteren besonderen Ausgestaltung der Erfindung werden weitere vorteilhafte optische Übertragungseigenschaften von flüssigen optischen Wellenleitern erzeugt, indem eine ausgewählte Vielfalt an geometrischen Formen der Kanäle in Bezug auf deren Querschnitt und Verlauf durch Wahl der Parameter der Laserablation gezielt, auch *in-situ,* eingestellt wird.

Mit der vorliegenden Erfindung lassen sich flüssige optische Wellenleiter ohne Masken direkt in einem Arbeitsgang herstellen, da Laserablation und Befüllung in einer Anordnung vereinigt werden. Besonders beachtenswert ist, dass die Oberflächenqualitäten wie z.B. die Seitenwandrauwerte der durch Laserbearbeitung hergestellten Kanäle nicht kritisch für dieses Verfahren sind. Dies gewährleistet hohe Flexibilität und Prozessstabilität und erlaubt den Einsatz dieses Verfahrens als Einsatz *Rapid Manufacturing Technologie.*

In einer besonders bevorzugten Ausgestaltung der Erfindung werden der Laser und der Tintenstrahlkopf, der eine Anzahl von Tropfen(strahl)düsen umfasst, fest in ein gemeinsames Gehäuse integriert. Durch entsprechende Relativbewegung zwischen diesem Gehäuse und dem Substrat ist gewährleistet, dass Schritt b) unmittelbar auf Schritt a) erfolgen kann.

Das erfindungsgemäße Verfahren weist insbesondere die folgenden Vorteile auf:
- kostengünstiges Verfahren,
- schneller Designwechsel möglich,
- variable Kanalgeometrien einstellbar,
- hohe Flexibilität und Prozessstabilität,
- keine Nachbearbeitung erforderlich,
- *Rapid Manufacturing* möglich.

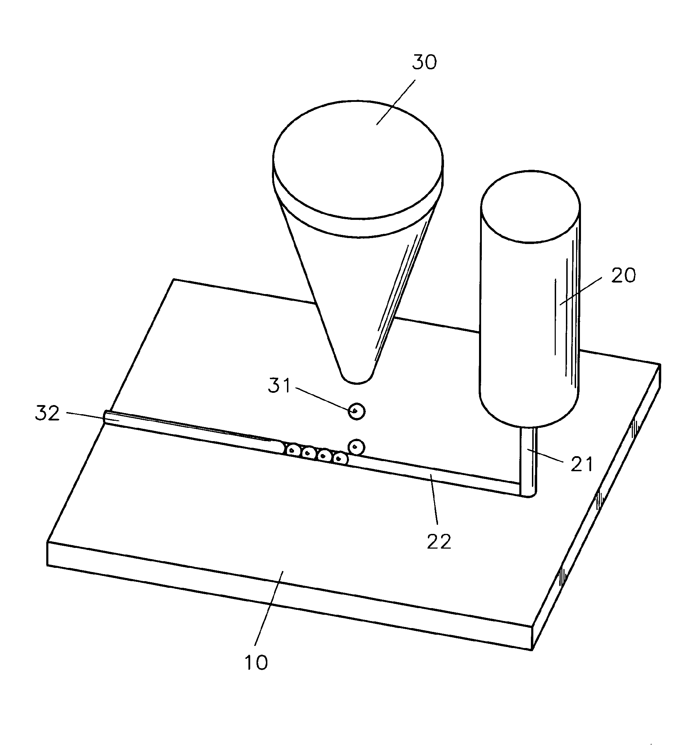

Die Erfindung wird im Folgenden anhand eines Ausführungsbeispiels mit Hilfe der Figur, die das erfindungsgemäße Verfahren schematisch darstellt, näher erläutert.

Zur Herstellung eines flüssigen optischen Wellenleiters wird ein Substrat **10** aus Polymethylmethacrylat (PMMA) mit einem Laserstrahl **21** aus einem UV-Laser **20** beaufschlagt. Als Laserstrahlquelle ist beispielsweise ein Excimer-Laser, ein frequenzvervielfachter Nd-YAG-Laser oder ein Ultrakurzpulslaser mit Pulsbreiten von ca. 100-200 fs geeignet, solange diese die Strukturierung des Substrats PMMA ermöglichen. Durch den Laser werden im Substrat **10** Kanäle (Gräben) **22** mit runden oder rechteckigen Querschnitt und Dimensionen (Durchmesser, Tiefe, Breite) im Bereich von 5-10 µm erzeugt.

Anschließend werden Tropfen **31** einer indexangepassten Flüssigkeit wie z. B. Methylmethacrylat (MMA) aus einer Tropfenstrahldüse **30** eines Tintenstrahlkopfs in die zuvor erzeugten Kanäle **22** eingefüllt. Durch Kapillarkräfte verbinden sich die Tropfen **31** innerhalb der Kanäle **22** zu einem flüssigen optischen Wellenleiter **32**. Der Tintenstrahlkopf wird elektronisch so angesteuert, dass Größe und Abstand der Tropfen **31** zu einer optimalen Befüllung der Kanäle **22** führen.

Abschließend wird die kanalseitige Fläche des Substrats **10** mit einem Deckel ebenfalls aus PMMA abgedeckt (verschlossen). Der Deckel ist innen hohl, so dass er die Kanäle **22** jeweils nicht berührt.

## Patentansprüche

1. Verfahren zur Herstellung von flüssigen optischen Wellenleitern, umfassend die Schritte:
a) Beaufschlagen eines Substrats (10) mit einem Laserstrahl (21) aus einem Laser (20), wodurch im Substrat (10) ein Kanal (22) erzeugt wird,
b) Einfüllen von Tropfen (31) eines flüssigen optischen Mediums aus einer Tropfendüse (30) in den Kanal (22), wobei sich die Tropfen (31) zu einem optischen Wellenleiter (32), der flüssig bleibt, verbinden, und
c) Abdecken der kanalseitigen Fläche des Substrats (10) mit einem Deckel, der den Kanal (22) nicht berührt.

2. Verfahren nach Anspruch 1, **dadurch gekennzeichnet, dass** der Laser (20) und die Tropfendüse (30) gekoppelt über das Substrat (10) geführt werden.

3. Verfahren nach Anspruch 1 oder 2, **dadurch gekennzeichnet, dass** aus mindestens zwei Tropfendüsen (30) Tropfen (31) mindestens eines flüssigen optischen Mediums in mindestens einen Kanal (22) eingefüllt werden.

4. Verfahren nach einem der Ansprüche 1 bis 3, **dadurch gekennzeichnet, dass** die transversalen Abmessungen des Kanals (22) so gewählt werden, dass ein flüssiger optischer monomodiger Wellenleiter ausgebildet wird.

5. Vorrichtung zur Herstellung von flüssigen optischen Wellenleitern, **dadurch gekennzeichnet, dass** diese einen Laser (20) und mindestens eine Tropfendüse (30) umfasst.

6. Vorrichtung nach Anspruch 5, **dadurch gekennzeichnet, dass** der Laser (20) und mindestens eine der Tropfendüsen (30) miteinander gekoppelt sind.
